## Europäisches Patentamt
## European Patent Office
## Office européen des brevets

(19)

(11) Publication number: **0 117 148**
**B1**

(12) **EUROPEAN PATENT SPECIFICATION**

(45) Date of publication of patent specification: **23.11.88**

(21) Application number: **84301084.4**

(22) Date of filing: **20.02.84**

(51) Int. Cl.⁴: **F 16 J 12/00, B 01 J 3/06**

(54) **High pressure apparatus.**

(30) Priority: **22.02.83 JP 28894/83**

(43) Date of publication of application:
**29.08.84 Bulletin 84/35**

(45) Publication of the grant of the patent:
**23.11.88 Bulletin 88/47**

(84) Designated Contracting States:
**DE GB SE**

(56) References cited:
**DE-A-1 961 702**
**DE-C- 838 597**
**DE-U-6 937 380**
**US-A-3 404 796**

(73) Proprietor: **KABUSHIKI KAISHA KOBE SEIKO SHO**
**3-18 1-chome, Wakinohama-cho Chuo-ku**
**Kobe 651 (JP)**

(72) Inventor: **Asari, Akira**
**16-15, Ohmiya-cho 3-chome Asahi-ku**
**Osaka (JP)**

(74) Representative: **Wright, Hugh Ronald et al**
**Brookes & Martin 52/54 High Holborn**
**London WC1V 6SE (GB)**

Courier Press, Leamington Spa, England.

## Description

The present invention relates to a high pressure apparatus to be used for forming and other high pressure processes and more particularly to a high pressure apparatus providing an improved fatigue life for a container which is a main constituent of the apparatus, improved technical reliability and stability and improved economy.

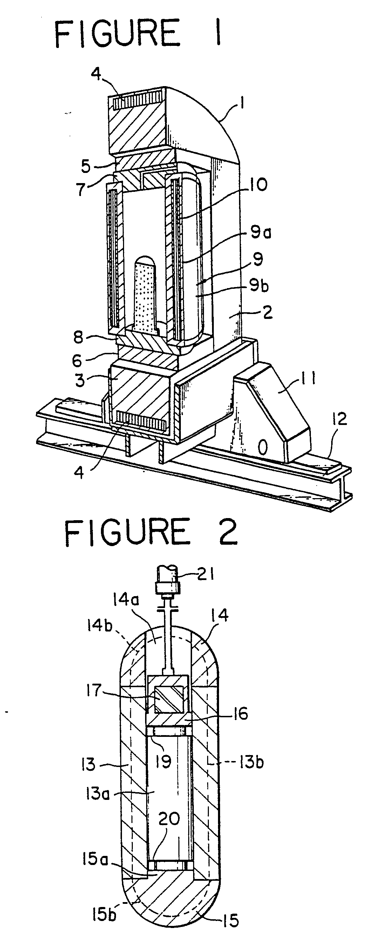

High pressure apparatus having a container provided internally with a closable cylindrical space for carrying out forming and other processing operations through a high or ultra-high pressure medium within such space are already known and used, for example, in conventional CIP (cold isostatic pressing) and HIP (hot isostatic pressing) systems. However, these conventional apparatus have an insufficient fatigue life which is caused by the repeated use of the container under a high or ultra-high pressure condition. In an effort to overcome this problem, there have been proposed, for example, a frame yoke type container having a wire winding structure for use in a CIP system (as will be explained later with reference to Figure 1), a screw cap type bottomed cylindrical container having a top screw cap, and a container wherein a pin is inserted crosswise with respect to a top cap or a plug eg DE-A-1961702. On the other hand US-A-3404796 discloses a high pressure tank in which the axial force is absorbed by bands of thin steel sheet wound around the apparatus. However, these conventional type apparatus are still unsatisfactory with respect to their manner of bearing the axial force induced by the ultra-high pressure in the container and also have a too complex structure and too great weight. Further, the loading and unloading of a workpiece is troublesome.

What is required is a high pressure apparatus having the strength of the wire wound apparatus and the ease of opening and closing of the container with pin.

The present invention provides a high pressure apparatus comprising;

a container internally provided with a closable cylindrical space and an opening of a diameter equal to the inside diameter of the closable cylindrical space within said container;

said container including a cotter or a pin inserted across said container at an axial end of said container, said cotter or pin serving to maintain said opening closed and to bear an axial force created by a high pressure within the container and to transmit said axial force to said container;

whereby said closed cylindrical space can be opened and closed by removal or insertion of said cotter or pin,

characterised in that a plurality of flexible members are wound round the outer periphery of the container itself generally parallel to the axis of the container to thereby exert an axial precompression on the whole of said container and to receive the axial force created by the high pressure within the container.

The present invention provides a high pressure apparatus including a container internally provided with a closable cylindrical space, said container including a cotter or a pin inserted across said container at one or both axial ends of said container, said cotter or pin serving to bear an axial force induced by a high pressure within the container; and a plurality of flexible members wound round the outer periphery of said container generally parallel to the axis of the container to thereby exert an axial precompression on the whole of said container.

In the present invention, an axial force bearing structure and a precompression structure are attached to such container to prevent the occurrence of stress concentration thereby improving the fatigue life, technical reliability and stability as well as simplifying the structure and reducing the weight.

Preferred embodiments of the invention will now be described with reference to the drawings in which:

Figure 1 is an oblique sectional view showing an example of a conventional high pressure apparatus;

Figures 2 to 4 are sections taken from different sides of a high pressure apparatus according to a first embodiment of the present invention;

Figures 5(1), (2) and (3) are longitudinally sectional front views of high pressure apparatus according to second, third and fourth embodiments of the invention;

Figures 6 and 7 are oblique sectional views of the apparatus of the first embodiment;

Figure 8 is a longitudinal section view of a high pressure apparatus according to a fifth embodiment of the invention taken from two different sides;

Figures 9(1) and (2) are longitudinal sectional front views showing an example of application of the apparatus of the first embodiment to a CIP system;

Figures 10(1), (2) and (3) are longitudinal sectional front views showing an example of application of the apparatus of the first embodiment to an HIP system;

Figures 11 and 12 are a side sectional views and a perspective view respectively of a high pressure apparatus according to a sixth embodiment of the invention;

Figure 13 is a perspective view of a high pressure apparatus according to a seventh embodiment of the invention.

Figure 14 is an oblique sectional view taken on line A-A of Figure 15;

Figure 15 is a sectional view taken on line B-B of Figure 14;

Figures 16(1), (2), (3) and (4) and Figure 17 are views taken from different sides and a perspective view respectively showing an example of application of the apparatus of the seventh embodiment to a CIP system.

Figure 18 is an explanatory view showing an example of use of a round pin; and

Figures 19(1) and 19(2) are explanatory views showing examples of use of plural cotters and pins respectively.

Referring first to Figure 1, there is shown an example of a conventional frame yoke type container having a wire winding structure as previously noted for use in a CIP system. In Figure 1, a container 9 which comprises a container liner 9a and an outer shell 9(b) is supported together with a top cap 7 and a bottom cap 8 through an upper yoke 1, a lower yoke 3, a side distance piece 2 interposed between the yokes 1 and 3, and upper and lower pressure plates 5 and 6. In the interiors of the upper and lower yokes 1 and 3 are embedded wires 4 in layers, and also between the liner 9a and the outer shell 9b of the container 9 is embedded wire 10 in layers on the radial side of the container. The lower yoke 3 is supported on a carriage 11 adapted to travel on a rail 12, whereby the entire frame is movably supported, so that before and after a high pressure processing, only the frame is moved thereby permitting a workpiece to be loaded in and out of the container 9. In this type of a high pressure apparatus, the frame and the container are formed separately and are independently movable, so they are inevitably very heavy, and for moving such a heavy apparatus it is necessary to use large moving equipment.

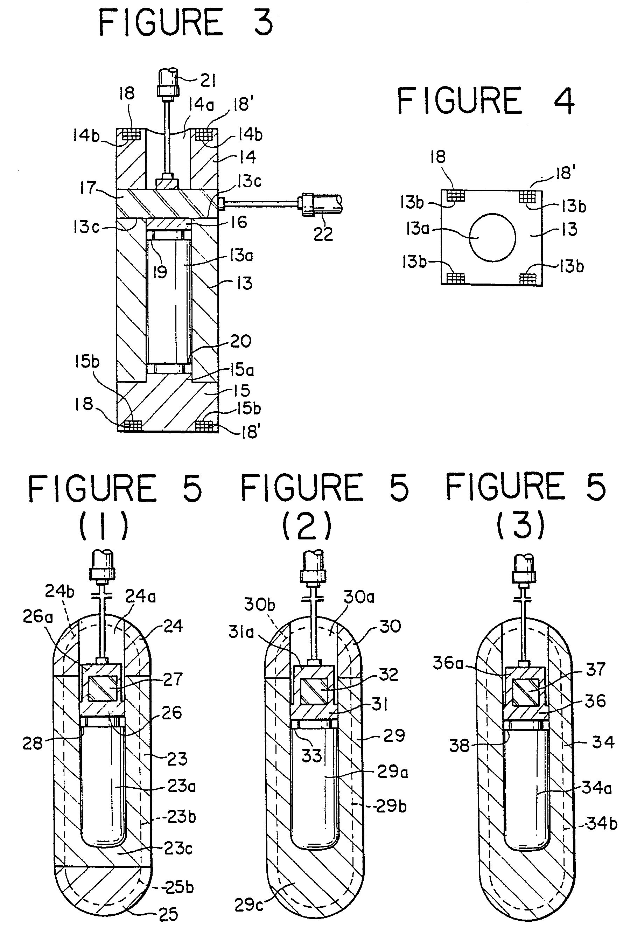

On the other hand, high pressure apparatus according to the present invention are of a structure as shown in Figures 2 et seq. The apparatus illustrated in Figures 2, 3 and 4 is of a first embodiment of the present invention which shows a basic construction of the invention. It is composed of a container body 13 having a generally square external form (see Figure 4) and provided internally with a space 13a capable of being closed, which space 13a is cylindrical in the illustrated embodiment, and upper and lower yokes 14 and 15 attached respectively to upper and lower open ends of the container body 13. In an axial upper end of the container body 13 is inserted a cotter 17, which may be a pin as will be described later, the cotter 17 extending across the container body 13 and being inserted and removed in mounting slots 13c in the upper end of the container body 13 by means of an inserting and removing means such as a hydraulic cylinder 22 or the like. The cotter 17 absorbs the axial force induced by an ultra high pressure in the container body. The upper peripheral surface of the cotter 17 is in contact with the lower end of the upper yoke 14 as shown. The upper yoke 14 has an opening 14a sealed by an upper seal member 16 through which opening 14a a workpiece may pass into and out of the space 13a within the container body 13. The opening 14a has a diameter corresponding to the inside diameter of the space 13a. The upper seal member 16 has a collar 16a through which the cotter 17 may pass. The reference numeral 21 denotes a hydraulic cylinder for insertion and removal of the upper seal member 16.

The lower yoke 15 is attached to the lower end of the container body 13 through a convex portion 15a thereof which is inserted into the lower end of the space 13a of the container body 13 as shown. The numerals 19 and 20 denote seal rings attached respectively to the upper seal member 16 and the lower yoke 15. The container body 13 and the upper and lower yokes 14 and 15 are assembled together as shown, and flexible members 18 and 18' such as wires or wire hoops are wound around the outer periphery of the assembly through outer peripheral grooves 13b, 14b and 15b formed longitudinally in the outer surface of the container body 13 and in the upper and lower yokes 14 and 15, whereby the three members 13, 14 and 15 are tightly bound together and the assembly is precompressed.

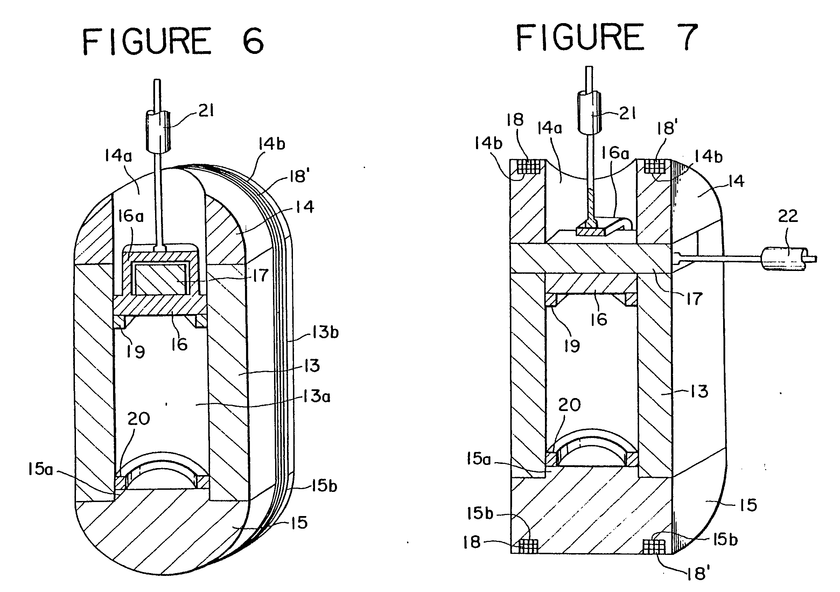

Figures 6 and 7 illustrate three dimensionally the entire construction of the apparatus of the first embodiment as assembled.

According to this first embodiment, the axial load is borne by the lower surface of the upper yoke 14 through the cotter 17, and the pressure receiving portion of the yoke comprises a smooth surface and does not have any notches which would provide a stress concentration. Consequently, a smooth resistance to the axial load is created in addition to the precompression produced by the flexible members 18 and 18' wound round the outer peripheries of the upper and lower yokes 14 and 15 and the container body 13. The axial load is resisted by the tension and friction induced in the flexible members 18 and 18' which are wound elliptically, whereby the fatigue life of the container body 13 can be increased and the durability of the entire pressure apparatus can be enhanced surely and safely without causing cracks or other troubles in the container body 13. Besides, according to this basic construction, since the number of components is minimised and the container body and the frame portion are clamped together, it is possible to reduce the size and weight of the apparatus which can resist a high or ultra high pressure, and the apparatus of such construction is extremely easy to manufacture as compared with the conventional type shown in Figure 1, thus leading to the possibility of a large reduction of cost. Further, since the operations required before and after a high pressure processing simply require the insertion and removal of the cotter 17, operation of the apparatus is simplified, which leads to a productivity improvement.

Referring now to Figs. 5(1), 5(2) and 5(3) there are shown high pressure apparatus according to second, third and fourth embodiments of the present invention, respectively. In the second embodiment illustrated in Figure 5(1), a container body 23 having a closable space 23a is closed at the bottom by a bottom wall portion 23c. Other details of the construction are the same as in the foregoing first embodiment, except that a lower yoke 25 is attached to the lower surface of the bottom portion 23c. An upper yoke 24 having an opening 24a and a peripheral groove 24b, a cotter 27, an upper seal member 26 having an opening 26a for the cotter 27, and a seal ring 28 attached to the seal member 26, are the same as in the first embodiment. The numerals 23b and 25b denote peripheral grooves formed respectively in the container body 23 and the lower yoke 25 for the winding of the flexible members 18, 18'.

In the third embodiment illustrated in Figure 5(2), a container body 29 has a space formed therein and a closed bottom portion 29c which is formed integrally in one piece with the lower yoke 15 or 25 shown previously. Other constructional details are the same as in the first embodiment. That is, an upper yoke 30 has an opening 30a and a peripheral groove 30b for the winding of the flexible member 18, 18'; and a cotter 32, an upper seal member 31 having an opening 31a for the cotter 32, and a seal ring 33 attached to the seal member 31, are also the same as in the first embodiment. The numeral 29b denotes a peripheral groove formed in the container body 29 for the winding of the flexible members 18, 18'.

In the fourth embodiment illustrated in Figure 5-3, a container body 34 having a space 34a capable of being closed is formed integrally in one piece with the upper and lower yokes 14 and 15. Therefore, the space 34a is open at the upper end of the container 34. A cotter 37, an upper seal member 36 having an opening 36a for the cotter 37, and a seal ring 38, are just the same as in the first embodiment, and a peripheral groove 34b for the winding of the flexible members 18, 18' is formed around the outer periphery of the unitary container 34. This embodiment is superior from the standpoint of simplicity of structure.

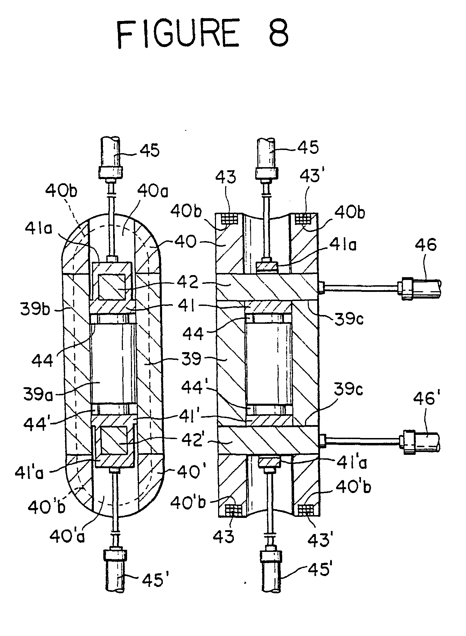

In the fifth embodiment illustrated in Figure 8, upper and lower yokes 40 and 40' are attached respectively to the upper and lower ends of a container body 39 having a closable space 39a, and an opening device is provided for each of the upper and lower yokes 40 and 40'. Openings 40a and 40a' for the opening defices are formed in the upper and lower yokes 40 and 40', respectively. Upper and lower seal members 41 and 41' can be inserted into and removed from the container body 39 through the upper and lower openings 40a and 40a' by means of hydraulic cylinders 45 and 45', respectively. Further removable cotters 42 and 42' (or pins) are provided at both axial ends of the container body 39, and the seal members 41 and 41' are formed with openings 41a and 41a' for the cotters 42 and 42' respectively.

The container body 39 is provided at both axial ends thereof with slots 39c for insertion therein of the cotters 42 and 42'. The numerals 44 and 44' denote seal rings attached to upper and lower seal members 41 and 41' respectively. Peripheral grooves 39b, 40b and 40b' are provided for the winding of flexible members 43 and 43', and hydraulic cylinders 46 and 46' are provided for the insertion and removal of the cotters 42 and 42'.

The upper and lower yokes 40 and 40' may be formed integrally in one piece with the container body 39.

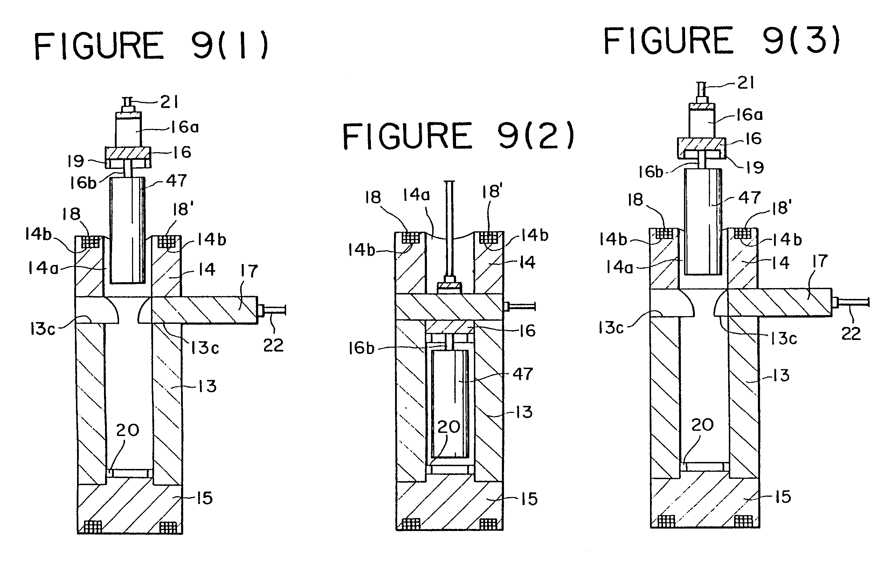

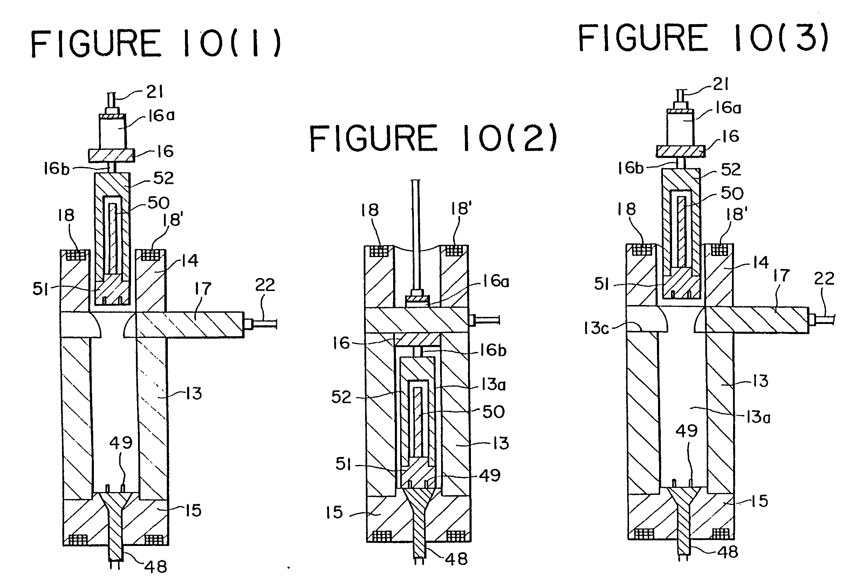

The apparatus of the present invention illustrated in the above-described embodiments are all applicable to conventional CIP or HIP systems. Examples of additional structural features to be added in such application of the apparatus will now be described with reference to Figures 9 and 10.

Figs. 9(1), 9(2) and 9(3) show an example of application of the apparatus of the first embodiment of the present invention illustrated in Figs. 2 to 4 to a CIP process. In Figs 9(1) to 9(3), the same reference numerals as in the first embodiment indicate the same structures. As shown in these figures, the apparatus of the invention only requires the addition of means wherein a workpiece 47 is supported on the side of the upper seal member 16 by a support member 16b. Figure 9(1) shows the apparatus ready for insertion of the workpiece 47, and Fig. 9(2) shows the apparatus when loaded with the cotter 17 inserted. In this loaded state, a high pressure medium is fed into the space 13a and a processing operation such as forming is carried out. Fig. 9(3) shows the apparatus as the workpiece is taken out of the container. Thus, the operations before and after the processing operation are simplified.

Figs. 10(1), 10(2) and 10(3) show an example of application of the apparatus of the first embodiment of the present invention illustrated in Figs. 2 to 4 to an HIP process. In this example, a workpiece 50, a lower heat insulating member 51 and a heat insulating casing 52 incorporating a heating source such as a heater (not shown) are supported on the side of the upper seal member 16 through the support member 16b, and an electric supply member 48 having a plug 49 for supplying an electric current to a heating source such as a heater (not shown) within the lower heat insulating member 51 is provided on the side of the lower yoke 15, whereby a desired processing such as hot forming can be easily carried out. Fig. 10(1) shows the apparatus as the workpiece is inserted, and Fig. 10(2) shows the apparatus with the workpiece loaded and the cotter 17 inserted. In this loaded state, a desired hot process is performed under a high pressure. Fig. 10(3) shows the apparatus as the workpiece is about to be taken out of the container after the process. Thus, the apparatus of the present invention is applicable to both CIP and HIP systems.

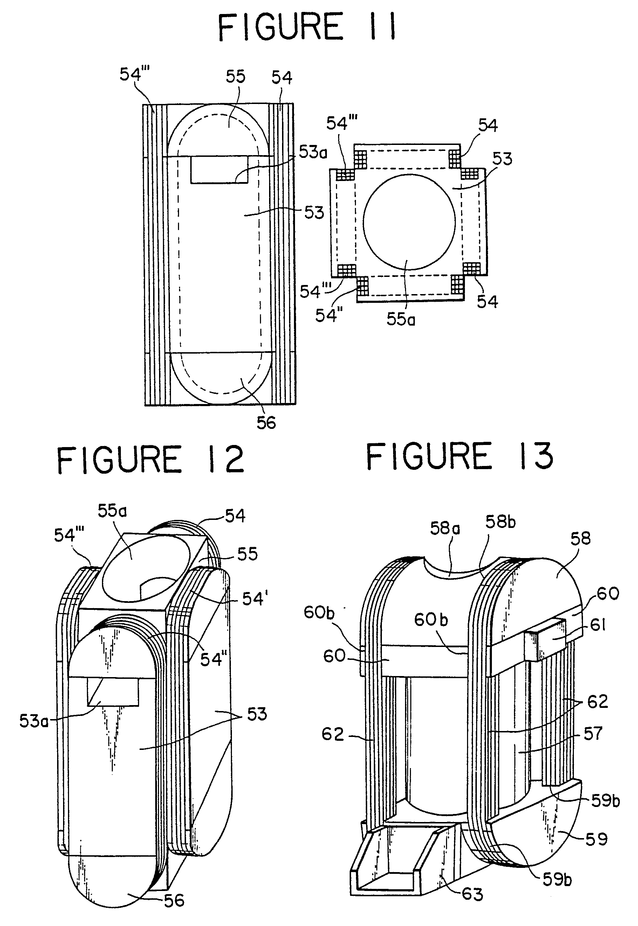

In all of the first to fifth embodiments of the present invention described above, two flexible members (eg wires or wire hoops) are wound round the container for precompressing the container, but any suitable number of flexible members may be used. For example, as in the sixth embodiment illustrated in Figs. 11 and 12, the number of flexible members used may be increased to four to render the precompression more uniform. More specifically, Figs. 11 and 12 show an example of a three-piece type high pressure apparatus comprising a container body 53, and separate upper and lower yokes 55 and 56. As shown in the Figures, the container body 53 and the upper and lower yokes 55 and 56 are of square section having projecting portions on the four sides thereof. Parallel flexible members 54 and 54'' are wound round respective projecting portions on opposite sides of the container and parallel flexible members 54' and 54''' are wound round respective projecting portions on opposite sides of the container parallel flexible members 54' and 54'' are wound round the other two respective projecting portions, so that a total of four flexible members are provided, one on each side. By the adoption of such an arrangement, a more uniform precompression effect is provided for any part of the entire circumference of the container. In both figures, the numeral 53a denotes a slot formed in the container body 53 for the insertion therein of a cotter or pin, and the numeral 55a denotes an opening formed in the upper yoke 55. Of course, the flexible members 54, 54', 54'' and 54''' are wound in peripheral grooves in the projecting portions.

The flexible member winding structure just described above is applicable also to the container structures of the second and the following embodiments other than the three-piece type structure composed of the container body 53 and the upper and lower yokes 55 and 56. The number of flexible members to be used may be selected freely according to the required purpose and use, for example, two, three or four, or six, seven or eight in the case of a relatively low axial load. Further, as a flexible member there also may be used a flexible plate member in addition to the wire or wire hoops.

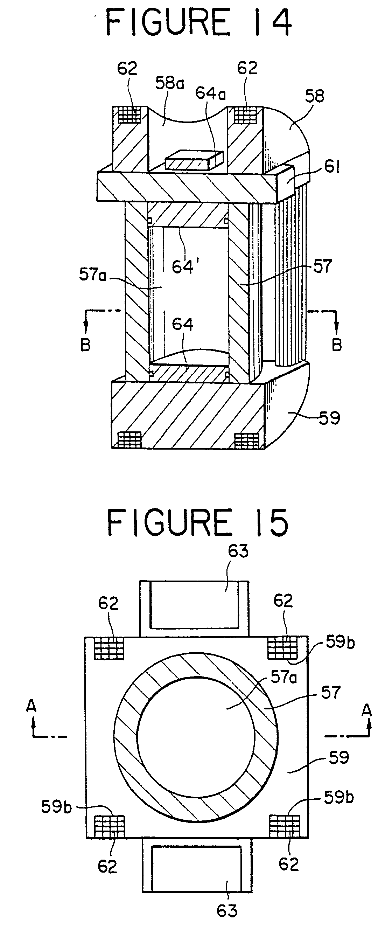

In the first to sixth embodiments already described above, the cotters 17, 27, 32, 37 and 42 are directly inserted and supported in one or both ends of the container bodies 13, 23, 29, 34, 39 and 53, respectively. On the other hand, in the seventh embodiment illustrated in Figures 13, 14 and 15, the cotter is inserted and supported in a distance piece interposed between the yoke and the container body, and the container body has a cylindrical cross section. More specifically, in Figures 13 to 15, a cylindrical container body 57 having a closable space 57a and upper and lower yokes 58 and 59 assembled with the container body 57 are each provided with a square end face which faces the container body 57. Further, a bottom cap 64 integral with the lower yoke 59 is fitted in the lower end of the container body 57, while between the square end face of the upper yoke 58 and the cylindrical upper end of the container body 57 is interposed a two-piece type distance piece 60 in which is removably inserted and supported a cotter 61. A top cap 64' which serves as an upper seal member is removably inserted into the container body through an opening 58a formed in the upper yoke 58, and it is formed with an opening 64a' for the cotter 61. A flexible member 62 is wound round the container through peripheral winding grooves 58b, 60b, and 59b formed respectively in the upper yoke 58, distance piece 60 and lower yoke 59 as shown in the Figures to precompress the container. In this case, the flexible member 62 does not directly contact the outer peripheral surface of the container body 57, but even in this arrangement, the precompression effect is applied to the entirety of the container body 57, the upper and lower yokes 58 and 59 and the distance piece 60. The cylindrical container body 57 serves also as a distance piece in the flexible member winding arrangement in addition to its primary function as a high pressure processing container. The numeral 63 in the Figures denotes a support frame provided on the side of the lower yoke 59. The distance piece 60 may be integral with the container body or with the upper yoke. Further, the container may have an integral bottom wall or may have both ends open as shown in Figures 2 to 12.

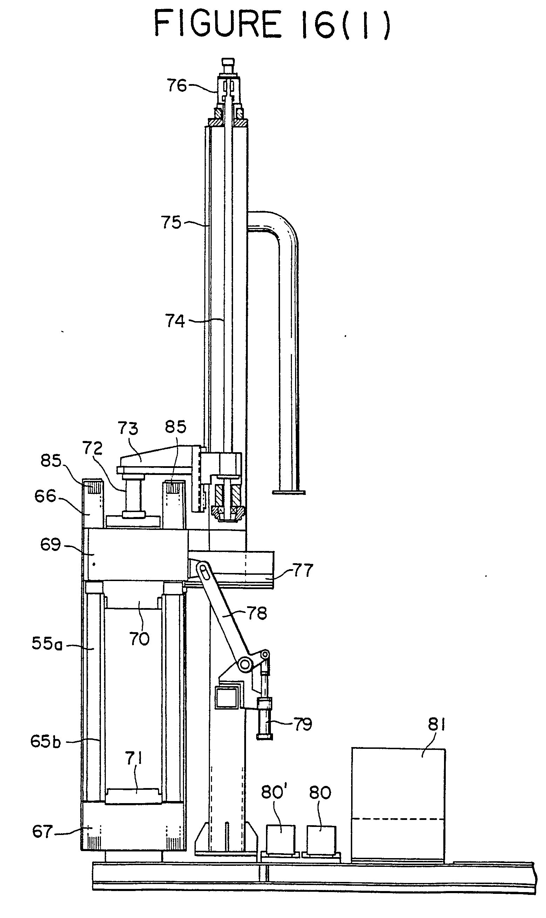

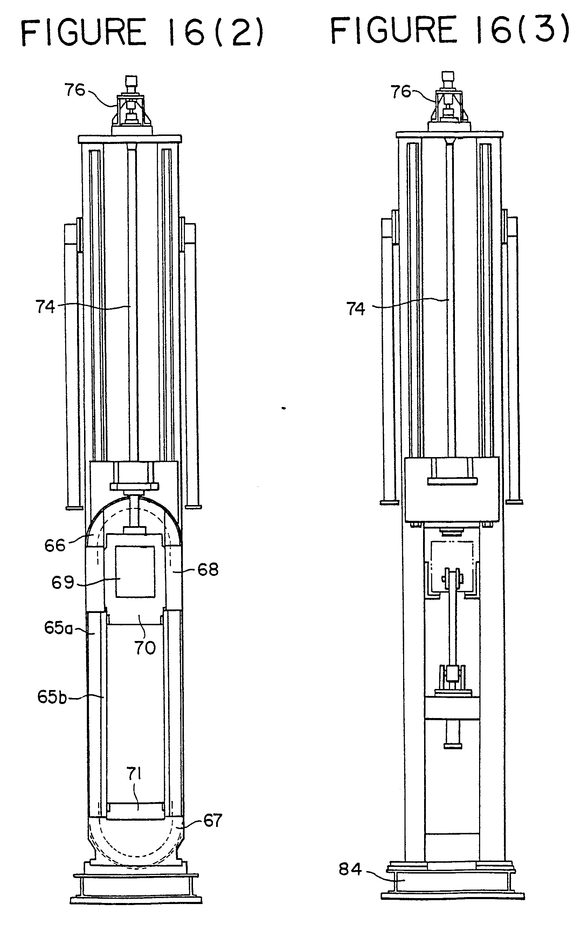

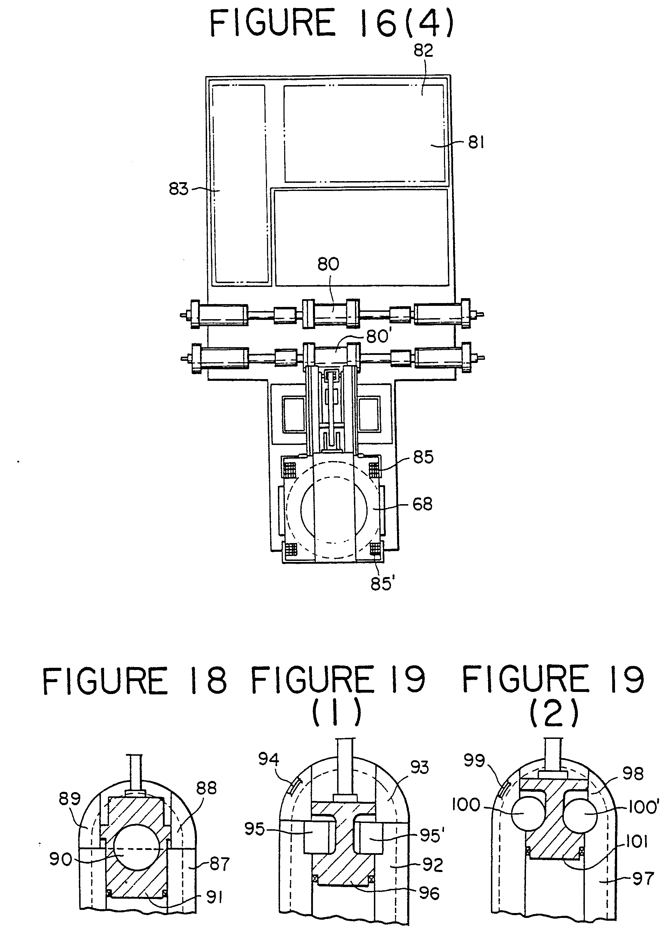

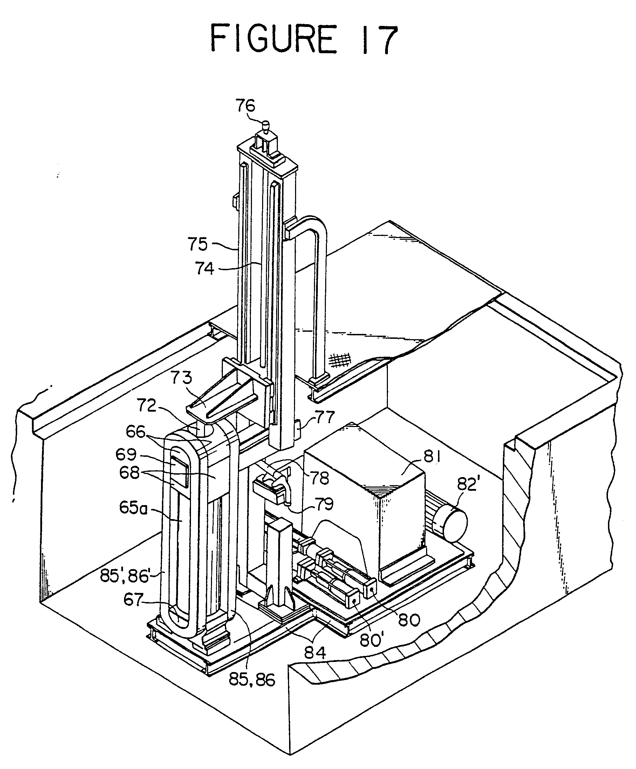

Referring now to Figures 16 and 17, there is shown for reference an example of the application to a CIP apparatus of the apparatus of the seventh embodiment of the present invention illustrated in Figures 13 to 15. Figures 16(1) to 16(4) are views taken from different sides of the CIP apparatus, and Fig. 17 is a perspective view of the entire apparatus. As shown in Figs. 16(1) and 16(2), a cylindrical container body 65 is composed of concentric inner and outer cylinders 65b and 65a, and an upper yoke 66 fixed to the upper end of the cylindrical container body 65 through a concave-shaped distance piece 68. Further, a top cap 70 is removably inserted into the inner cylinder 65b by a support means 72, and a cotter 69 is removably inserted and supported in the distance piece 68 across the top cap 70 by a cotter guide and a link 78 which connects the cotter 69 with a cotter drive cylinder 79. A lower yoke 67 having a bottom cap 71 adapted to be fitted in the lower end of the inner cylinder 65b is affixed to the lower end of the container body 65. The upper yoke 66, distance piece 69, container body 65 and lower yoke 67 are tightly joined together by flexible members 85 and 85' comprising wires, and is mounted on a base frame 84 after being covered with covers 86 and 86'.

The support means 72 is held by a lift screw 74 in a guide post 75 via a slide 73 and is moved vertically by means of a drive unit 76 for opening and closing, of the container to allow the workpiece to be inserted into and removed from the container. Indicated at 80 and 80' are intensifiers, at 81 an oil tank, at 82 a pump unit and at 83 a valve unit.

In the apparatus of the present invention, moreover, there may be used a circular section pin in place of the rectangular section cotter as previously illustrated. In this connection, Figure 18 shows an example of a structure using a pin, in which a round pin 90 is removably inserted and supported across a top 91 of a container 87 to which is affixed an upper yoke 88. Thus, a pin may be used in the same way as a cotter without any trouble. Figs. 19(1) and 19(2) show examples of using a plurality of cotters or pins. Fig. 19(1) shows the use of two cotters 95 and 95' in which the cotters are removably inserted and supported in a container body 92, on both sides of a top cap 96, the cotters extending in a direction across the top cap 96, the container body 92 being fixed to an upper yoke 93. In the case of round pins, as illustrated in Fig. 19(2), two round pins 100 and 100' are removably inserted and supported across and on both sides of a top cap 101 fitted in a container body 97 to which is fixed an upper yoke 98. Thus, a plurality of cotters or pins may be readily employed. In both Figures, the numerals 94 and 99 denote flexible members for precompression.

As will be apparent from the foregoing embodiments, the apparatus of the invention is advantageous in that it can remarkably improve the fatigue life of a high pressure container. This is an important requirement of high pressure apparatus which is used to perform various processes in an internal space thereof under high or ultra-high pressure conditions. In the present invention, the large axial load induced by the high pressure in the container can be borne smoothly and resisted by a cotter or pin inserted transversely in the container.

Precompression is created by winding flexible members round the whole of the container, and thus the effect of the pressure upon the container is reduced. Further, the smooth pressure receiving surfaces have barely any uneven or notched portions so that stress concentrations are avoided, and the simple structure and reduced number of constituent members compared with the prior art, permits the reduction in size and weight of the entire apparatus with an improvement of reliability, stability and durability. As a result a high pressure apparatus can be provided which is easy to manufacture and which is economical and of low cost. Also, as shown in the foregoing embodiments, the apparatus of the present invention is easily applicable to CIP and HIP systems.

**Claims**

1. A high pressure apparatus comprising;
a container (13) internally provided with a closable cylindrical space (13a) and an opening (14a) of a diameter equal to the inside diameter of the closable cylindrical space (13a) within said container (13);
said container (13) including a cotter (17) or a pin inserted across said container (13) at an axial end of said container (13), said cotter (17) or pin serving to maintain said opening (14a) closed and to bear an axial force created by a high pressure within the container (13) and to transmit said axial force to said container (13);
whereby said closed cylindrical space (13a) can be opened and closed by removal or insertion of said cotter (17) or pin,
characterised in that a plurality of flexible members (18, 18') are wound round the outer periphery of the container (13) itself generally parallel to the axis of the container (13) to thereby exert an axial precompression on the whole of said container (13) and to receive the axial force created by the high pressure within the container (13).

2. A high pressure apparatus according to claim 1, characterised in that the container (13) further includes a first seal member (19).

3. A high pressure apparatus according to claim 1 or 2, characterised in that said container (13) comprises a plurality of members including a first yoke (14), a container body (13) and a second yoke (15).

4. A high pressure apparatus according to claim 3, characterised in that said first yoke (14) is provided with an opening (14a) of a diameter equal to the inside diameter of the closable cylindrical space (13a) within said container (13).

5. A high pressure apparatus according to any of claims 1 to 4, characterised in that said flexible member (18, 18') comprises wires or wire hoops.

6. A high pressure apparatus according to any of claims 1 to 5, characterised in that there are a plurality of cotters (17) or pins.

7. A high pressure apparatus according to any of claims 1 to 6 characterised in that the flexible members (18, 18') are provided on opposite sides of said opening (14a).

8. A high pressure apparatus according to any of claims 1 to 7 characterised in that the one or plurality of cotters (7) or pins are mounted between a first pair of aligned opposing openings (13C) in the container (13) adjacent said container opening (14A).

9. A high pressure apparatus according to claim 2 and any of claims 3 to 8 characterised in that there is provided a first seal moving means (21) for moving said first seal member (19) between a first position in which it sealingly closes said opening (14A) cylindrical space (13A) and a second position in which it does not close said opening (14A).

10. A high pressure apparatus according to claim 8 and 9 characterised in that said first seal member (19) includes an opening (16A) shaped and positioned to align with said aligned opposed openings (13C) when said first seal member is in its first closed position.

11. A high pressure apparatus according to any of claims 1 to 10 characterised by cotter moving means (22) for moving each cotter (17) or pin to remove or insert said cotter (17) or pin.

12. A high pressure apparatus according to any of claims 1 to 11, characterised in that said container (13) has an open first end and a closed second end.

13. A high pressure apparatus according to any of claims 1 to 11, characterised in that said container (13) has open first (14a) and second (40a') ends.

14. A high pressure apparatus according to claim 13 characterised in that said apparatus further comprises a second seal member (41') for said second open end (40a'),
an opening (40a') at said second open end being provided of a diameter equal to the inside diameter of the closable cylindrical space (13A) within said container (13);

said container (13) including a second cotter (42') or a pin inserted across said container (13) at said second end of said container (13), said cotter (42') or pin serving to maintain said opening closed and to bear an axial force created by a high pressure within the container (13) and to transmit said axial force to said container; and

a second yoke (40') is provided with an opening of a diameter equal to the inside diameter of the closable cylindrical space (13A) within said container (13).

**Patentansprüche**

1. Hochdruckgerät, mit einem einen verschließbaren zylindrischen Raum (13a) enthaltenden und eine öffnung (14a) gleich großen Durchmessers wie der Innendurchmesser des verschließbaren zylindrischen Zwischenraums (13a) aufweisenden Behälter (13), wobei der Behälter (13) einen Querriegel (17) oder Vorsteckkeil enthält, der quer durch den Behälter (13) an einem axialen Ende des Behälters (13) eingesteckt ist und dazu dient den Hohlraum (14a) geschlossen zu halten und eine axiale Kraft aufzufangen, die von einem Hochdruck im Behälter (13) erzeugt wird, und um die axiale Kraft auf den Behälter (13) zu übertragen, wodurch der geschlossene zylindrische Raum (13a) durch Entfernen und Einstecken des Qerriegels (17) oder Vorsteckkeiles geöffnet und geschlossen werden kann, dadurch gekennzeichnet, daß eine Vielzahl flexibler Teile (18, 18') um die Außenfläche des Behälters (13) im wesentlichen parallel zu der Achse des Behälters (13) gewunden ist, um dadurch eine axiale Druckvorspannung auf den ganzen Behälter (13) auszuüben und um die durch den Hochdruck im Behälter (13) erzeugte axiale Kraft aufzunehmen.

2. Hochdruckgerät nach Anspruch 1, dadurch gekennzeichnet, daß der Behälter (13) außerdem eine erste Dichtung (1) aufweist.

3. Hochdruckgerät nach Anspruch 1 oder 2, dadurch gekennzeichnet, daß der Behälter (13) eine Vielzahl von Teilen einschließlich einem ersten Joch (14), einem Behälterkörper (13) und einem zweiten Joch (15) aufweist.

4. Hochdruckgerät nach Anspruch 3, dadurch gekennzeichnet, daß das erste Joch (14) mit einer öffnung (14a) ausgestattet ist, die einen gleich großen Durchmesser wie der Innendurchmesser des verschließbaren zylindrischen Raumes (13a) des Behälters (13) hat.

5. Hochdruckgerät nach einem der Ansprüche 1 bis 4, dadurch gekennzeichnet, daß die flexiblen Teile (18, 18') Drähte oder Drahtreifen aufweisen.

6. Hochdruckgerät nach einem der Ansprüche 1 bis 5, dadurch gekennzeichnet, daß eine Mehrzahl von Querriegeln (17) oder Vorsteckkeilen vorgesehen ist.

7. Hochdruckgerät nach einem der Ansprüche 1 bis 6; dadurch gekennzeichnet, daß die flexiblen Teile (18, 18') an entgegengesetzten Seiten der öffnung (14a) vorgesehen sind.

8. Hochdruckgerät nach einem der Ansprüche 1 bis 7, dadurch gekennzeichnet, daß der oder die Querriegel (17) oder Vorsteckkeile zwischen einem ersten Paar von miteinander fluchtenden, einander gegenüberliegenden öffnungen (13c) in dem Behälter (13) angrenzender Behälteröffnung (14a) angebracht sind.

9. Hochdruckgerät nach Anspruch 2 und einem der Ansprüche 3 bis 8, dadurch gekennzeichnet, daß ein erster Dichtungsbeweger (21) zum Bewegen der ersten Dichtung (19) zwischen einer ersten Position, in der sie die öffnung (14a) des zylindrischen Raumes (13a) dichtend schließt, und einer zweiten Position, in der sie die öffnung (14a) nicht schließt, vorgesehen ist.

10. Hochdruckgerät nach Anspruch 8 und 9, dadurch gekennzeichnet, daß die erste Dichtung (19) eine öffnung (16a) aufweist, die so ausgebildet und angeordnet ist, daß sie mit den miteinander fluchtenden, einander gegenüberliegenden öffnungen (13c) fluchtet, wenn sich die erste Dichtung in ihrer ersten Schließposition befindet.

11. Hochdruckgerät nach einem der Ansprüche 1 bis 10, dadurch gekennzeichnet, daß Querriegelbeweger (22) zum Bewegen jedes Querriegels (17) oder Vorsteckkeile vorgesehen sind, um den Querriegel (17) oder Vorsteckkeil zu entfernen oder einzustecken.

12. Hochdruckgerät nach einem der Ansprüche 1 bis 11, dadurch gekennzeichnet, daß der Behälter (13) ein offenes erstes Ende und ein geschlossenes zweites Ende hat.

13. Hochdruckgerät nach einem der Ansprüche 1 bis 11, dadurch gekennzeichnet, daß der Behälter (13) offene erste (14a) und zweite (40a') Enden hat.

14. Hochdruckgerät nach Anspruch 13, dadurch gekennzeichnet, daß das Gerät eine zweite Dichtung (41') für das zweite offene Ende (40a') aufweist, wobei eine öffnung (40a') an dem zweiten offenen Ende einen gleich großen Durchmesser wie der Innendurchmesser des verschließbaren zylindrischen Raumes (13a) im Behälter (13) hat und in den Behälter (13) ein zweiter Querriegel (42') oder Vorsteckkeil quer durch den Behälter (13) an dem zweiten Ende des Behälters (13) eingesteckt ist, der dazu dient, die öffnung geschlossen zu halten und eine axiale Kraft aufzufangen, die von einem Hochdruck im Behälter (13) erzeugt wird, und um diese axiale Kraft auf den Behälter (13) zu übertragen, und wobei ein zweites Joch (40') mit einer öffnung gleich großen Durchmessers wie der Innendurchmesser des verschließbaren zylindrischen Raumes (13a) im Behälter (13) vorgesehen ist.

**Revendications**

1. Appareil pour haute pression comprenant:
un conteneur (13) muni intérieurement d'un espace cylindrique obturable (13a) et d'un orifice (14a) d'un diamètre égal au diamètre interne de la partie cylindrique obturable (13a) à l'intérieur dudit container (13);
ledit (13) comprenant une clavette (17) ou une cheville insérée au travers du conteneur (13) à une extrémité axiale dudit conteneur (13), ladite clavette (17) ou cheville permettant de maintenir ledit orifice (14a) fermé et de supporter une force axiale créée par une haute pression à l'intérieur du container (13) et de transmettre la force axiale audit container (13);

de sorte que ledit espace cylindrique obturable (13a) puisse être ouvert et fermé par enlèvement ou introduction de ladite clavette (17) ou cheville,

caractérisé en ce qu'une pluralité d'éléments flexibles (18, 18') sont enroulés autour de la périphérie externe du conteneur (13) eux-mêmes, de manière générale, parallèles à l'axe du conteneur (13), pour exercer une précompression axiale sur l'ensemble dudit conteneur (13) et pour recevoir la force axiale créée par la haute pression à l'intérieur du conteneur (13).

2. Appareil pour haute pression selon la revendication 1, caractérisé en ce que le conteneur (13) comporte en outre un premier élément de scellement (19).

3. Appareil pour haute pression suivant la revendication 1 ou 2, caractérisé en ce que ledit conteneu (13) comprend une pluralité d'éléments incluant une première culasse (14), corps de conteneur (13) et une seconde culasse (15).

4. Appareil pour haute pression suivant la revendication 3, caractérisé en ce que ladite première culasse (14) est equipée d'un orifice (14a) d'un diamètre égal au diamètre interne de l'espace cylindrique obturable (13a) à l'intérieur dudit conteneur (13).

5. Appareil pour haute pression suivant l'une quelconque des revendications 1 à 4, caractérisé en ce que ledit élément flexible (18, 18') comprend des fils ou des cerclages de fils.

6. Appareil pour haute pression selon l'une quelconque des revendications 1 à 5, caractérisé en ce qu'il comporte une pluralité de clavettes (17) ou de chevilles.

7. Appareil pour haute pression selon l'une quelconque des revendications 1 à 6 caractérisé en ce que les éléments flexibles (18, 18') sont disposés sur des côtés opposés dudit orifice (14a).

8. Appareil pour haute pression selon l'une quelconque des revendications 1 à 7 caractérisé en ce qu'une ou plusieurs clavettes (17) ou chevilles sont montées entre une première paire d'orifices opposés et alignés (13c) dans le conteneur (13) de manière adjacente audit orifice dudit conteneur (14a).

9. Appareil pour haute pression selon la revendication 2 et l'une quelconque des revendications 3 à 8 caractérisé en ce qu'il est muni d'un premier moyen de déplacement de scellement (21) pour déplacer ledit premier élément de scellement (19) entre une première position dans laquelle il ferme de manière étanche ledit orifice (14a) de l'espace cylindrique (13a) et une seconde position dans laquelle il ne ferme pas ledit orifice (14a).

10. Appareil pour haute pression selon les revendications (8) et (9) caractérise en ce que ledit premier élément de scellement (19) comprend un orifice (16a) conformé et positionné en alignement avec lesdits orifices (13c) opposés de manière alignee quand ledit premier élément de scellement se trouve dans se premiere position fermee.

11. Appareil pour haute pression selon l'une quelconque des revendications 1 à 10 caractérisé par des moyens de déplacement de clavettes (22) pour déplacer chaque clavette (17) ou cheville de manière à enlever ou introduire ladite clavette (17) ou cheville.

12. Appareil pour haute pression selon l'une quelconque des revendications 1 à 11, caractérisé en ce que ledit conteneur (13) possède une première extrémité ouverte et une seconde extrémité fermée.

13. Appareil pour haute pression selon l'une quelconque des revendications 1 à 11, caractérisé en ce que ledit conteneur (13) possède une première (14a) et seconde (40a') extrémité ouverte.

14. Appareil pour haute pression selon la revendication 13 caractérisé en ce que ledit appareil comprend en outre un second élément de scellement (41') pour ladite seconde extrémité ouverte (40a'),

un orifice (40a') à ladite seoonde extrémité ouverte possédant un diamètre égal au diamètre interne de l'espace cylindrique obturable (13a) à l'intérieur dudit conteneur (13);

ledit conteneur (13) comportant une seconde clavette (42') ou cheville introduite au travers dudit conteneur (13) à ladite seconde extrémité dudit conteneur (13), ladite clavette (42') ou cheville servant à maintenir ledit orifice fermé et à supporter une force axiale créée par une haute pression à l'intérieur du conteneur (13) et à transmettre ladite force axiale audit conteneur; et

une seconde culasse (40') est pourvue d'une ouverture d'un diamètre égal au diamètre interne de l'espace cylindrique obturable (13a) à l'intérieur dudit conteneur (13).

# FIGURE 1

# FIGURE 2

EP 0 117 148 B1

FIGURE 3    FIGURE 4

FIGURE 5 (1)    FIGURE 5 (2)    FIGURE 5 (3)

2

FIGURE 7

FIGURE 6

# FIGURE 8

# FIGURE 9(1)

# FIGURE 9(3)

# FIGURE 9(2)

EP 0 117 148 B1

# FIGURE 10(1)

# FIGURE 10(3)

# FIGURE 10(2)

EP 0 117 148 B1

# FIGURE 11

# FIGURE 12

# FIGURE 13

# FIGURE 14

# FIGURE 15

# FIGURE 16(1)

# FIGURE 16(2)    FIGURE 16(3)

# FIGURE 16(4)

# FIGURE 18    FIGURE 19 (1)    FIGURE 19 (2)

# FIGURE 17